# EUROPEAN PATENT APPLICATION

(11) **EP 2 454 949 A1**
(43) Date of publication of application: **23.05.2012**
(21) Application number: 10799912.0
(22) Date of filing: 12.07.2010
(51) Int. Cl.: A23L 1/10

(54) **METHOD FOR PRODUCING ROLLED FOOD IN FROZEN STATE**

(30) Priority: 13.07.2009 JP 2009164922
(71) Applicant: Ajinomoto Co., Inc., Tokyo, 104-8315 (JP)
(72) Inventor: MIZUNO, Hiroshi, Oura-gun Gunma 370-0523 (JP); OKA, Shuhei, Oura-gun Gunma 370-0523 (JP); SEKINE, Masashi, Oura-gun Gunma 370-0523 (JP); YAMAMOTO, Tatsuya, Oura-gun Gunma 370-0523 (JP)
(74) Representative: Strehl Schübel-Hopf & Partner
(86) International application number: PCT/JP2010/062031
(87) International publication number: WO 2011/007854

(57) **Abstract**

Disclosed is a method for producing frozen rolled food that can be frozen in a favorable state and tastes good after thawing. Food items such as rolled egg, *koya-dofu* (freeze-dried bean curd), *shiitake* mushroom, *kamaboko* (minced and steamed fish meat), and *kanpyo* (dried gourd shavings) are appropriately cooked and seasoned. These food items are aligned in a predetermined length, and individually frozen using a cryogen such as dry ice/ethanol to form a core 2. Then, a thin sheet of *sushimeshi* 4 is spread over a bamboo mat or a wrapping film, and a dried laver sheet 3 is overlaid on the *sushimeshi* 4. The core 2 is then placed on the dried laver sheet 3 in the frozen state. The *sushimeshi* 4 and the dried laver sheet 3 are wrapped around the core 2 held at the center to form a sushi roll. The sushi roll is then rapidly frozen at -50°C or less to obtain a frozen sushi roll 1.

## Description

### [Technical Field]

The present invention relates to a method for producing rolled food, such as sushi rolls and rolled cakes, in a frozen state from a rolled food obtained by wrapping a food sheet around a core.

### [Background Art]

As one method of producing rolled food such as sushi rolls and rolled cakes, a method is available in which ingredients forming a stick-shaped core are frozen, and a sheet of food, or a food sheet, is wrapped around the frozen core to uniformly produce rolled food in large quantity (see, for example, Patent Literature 1).

### [Citation List]

### [Patent Literature]

[Patent Literature 1] JP-A-6-237717

### [Summary of the Invention]

### [Problems that the Invention is to Solve]

There is a demand for rolled foods, such as sushi rolls and rolled cakes, that can be preserved in a frozen state, in recent years. For example, rolled foods that use cooked rice as in sushi rolls require rapid freezing at -100°C or less, because slow freezing such as in a freezer degrades the cooked rice. However, rapid freezing of a formed sushi roll often creates a difference in expansion rate because of the temperature difference between the central portion and the peripheries, and tends to cause cracking on the surface, with the result that the commodity value is lost. The method of Patent Literature 1 involves such degradation of cooked rice when the food is frozen in a freezer, and thus causes a significant loss in the texture.

It is accordingly an object of the present invention to provide a method for producing frozen rolled food, whereby the rolled food can be frozen in a favorable state and can provide good quality upon thawing.

### [Means for Solving the Problems]

In order to achieve the foregoing object, the present invention provides a method for producing frozen rolled food through freezing of a rolled food obtained by wrapping a food sheet around a core, the method including freezing the core and wrapping the food sheet around the core to form a rolled food, and freezing the rolled food with a cryogen of -50°C or less. The rolled food may be a sushi roll.

### [Advantage of the Invention]

The method for producing frozen rolled food according to the present invention forms the food by wrapping a food sheet around a core frozen in advance, and rapidly freezes the food by directly dipping it in a ultralow-temperature cryogen of -50°C or less before the core temperature increases. In this way, the difference in the expansion rate between the peripheries and the central portion of the formed product can be made smaller to prevent cracking. Further, because the food is rapidly frozen, it is possible to suppress degradation of cooked rice, which is susceptible to degradation, and to provide a frozen rolled food that is cosmetically appealing and has a good texture upon being thawed for consumption. Further, the rapid freezing can prevent degradation even for food that contains a food sheet susceptible to degradation, and can thus provide a frozen rolled food, for example, a frozen sushi roll, that provides good quality upon thawing.

### [Brief Description of the Drawings]

Fig. 1 is a front view of a frozen sushi roll representing an embodiment of the present invention.
Fig. 2 is a cross sectional view of the frozen sushi roll.
Fig. 3 is a front view of a frozen sushi roll of Example 1 frozen with liquid nitrogen.
Fig. 4 is a graph representing a freeze curve of a frozen sushi roll produced under varying freezing conditions in Example 2.

### [Description of Reference Numerals and Signs]

- 1: Frozen sushi roll
- 2: Core
- 3: Dried laver sheet
- 4: *Sushimeshi* (vinegar-seasoned rice)
- 5: Crack

### [Mode for Carrying Out the Invention]

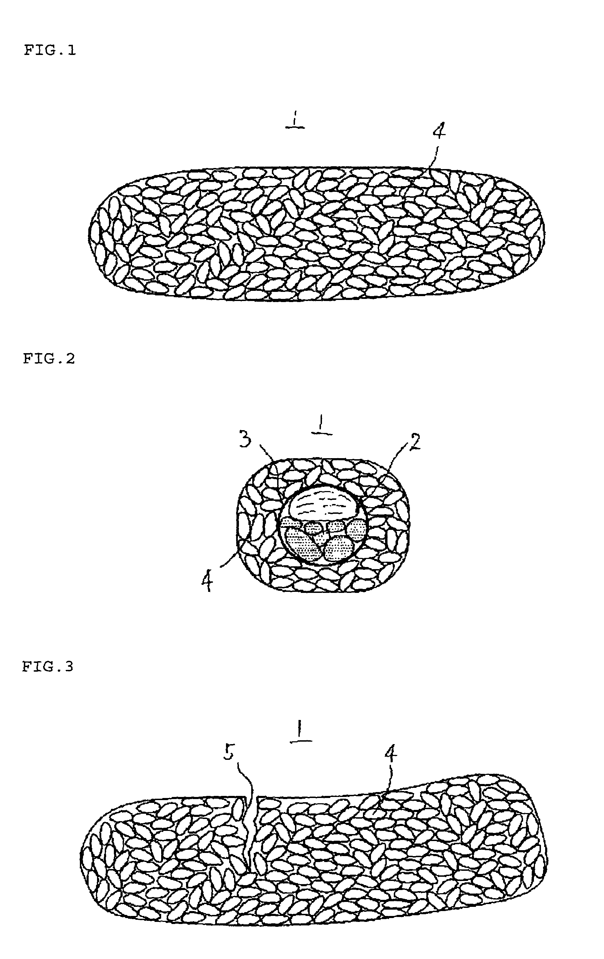

Fig. 1 represents an embodiment of the present invention applied to a frozen sushi roll. A frozen sushi roll 1 includes a stick-shaped core 2 formed by appropriately cooking and seasoning the ingredients, and a dried laver sheet 3 and a thin sheet of *sushimeshi* 4 wrapped around the core 2.

The core 2 is obtained by appropriately cooking and seasoning food items, for example, such as rolled egg, koya-dofu (freeze-dried bean curd), shiitake mushroom, shrimp, and *kanpyo* (dried gourd shavings). These food items are aligned in a predetermined length and individually frozen using a cryogen such as dry ice and ethanol. Then, a thin sheet of *sushimeshi* 4 is spread over a bamboo mat or a wrapping film, and the dried laver sheet 3 is overlaid on the *sushimeshi* 4. The core 2 is then placed on the dried laver sheet 3 in the frozen state. The *sushimeshi* 4 and the dried laver sheet 3 are wrapped around the core 2 held at the center to form a sushi roll. The sushi roll is then rapidly frozen by being directly dipped in a cryogen of -50°C or less, for example, -70°C dry ice/ethanol or -196°C liquid nitrogen, while maintaining the core 2 in the low-temperature frozen state. As a result, the frozen sushi roll 1 is obtained.

In this manner, the frozen sushi roll 1 is produced with the core 2 frozen in advance, and as such the rapid freezing of the roll of the dried laver sheet 3 and the *sushimeshi* 4 around the core 2 is unlikely to create a difference in the expansion rate between the peripheries and the central portion of the frozen sushi roll 1. There accordingly will be no cracking on the surface, and the frozen sushi roll 1 is cosmetically appealing. Further, because the *sushimeshi* 4, susceptible to degradation, is rapidly frozen, degradation can be suppressed, and the frozen sushi roll 1 can provide good taste upon thawing. Further, because the *sushimeshi* 4 is wrapped around the core 2 while the core 2 is in the frozen state, the forming procedure is easy, and deformation is unlikely to occur. Further, because the core 2 is frozen and the shape remains stable, and does not move around when wrapping the *sushimeshi* or dried laver sheet, the shape and the combination of the core 2 can be varied to desirably decorate the sushi roll with a flower or an animal pattern on the cross section.

Note that the present invention is not limited to the foregoing embodiment, and the dried laver sheet may be wrapped around the outer side of the *sushimeshi.* Further, the invention is also applicable to *hosomaki,* obtained by wrapping *sushimeshi* around a core that includes only one ingredient. Aside from sushi rolls, the invention is also applicable to, for example, rolled cake that includes a fruit or a cream core, and a sheet-like sponge cake wrapped around the core.

### [Examples]

### [Example 1]

The dried laver sheet 3 and *sushimeshi* 4 were wrapped around the core 2 of the frozen sushi roll of the foregoing embodiment without freezing the core 2 in advance, and sushi rolls (here and below, *futomaki,* 5 cm in diameter) were obtained. The sushi rolls were frozen with liquid nitrogen (-196°C), dry ice/ethanol (-70°C), and air blast (-30°C), and the extent of surface cracking was compared. The results are presented in Table 1.

**[Table 1]**

| Cryogen | Occurrence of cracking | |
|---|---|---|
| Liquid nitrogen | Poor | Very noticeable; tend to remain even after thawing |
| Dry ice/ethanol | Acceptable | Present; almost unnoticeable after thawing |
| Air blast | Good | Absent |

It can be seen from the results presented in Table 1 that surface cracking easily occurs by low-temperature rapid freezing, particularly in samples frozen with the liquid nitrogen, as demonstrated by the generation of a crack 5 on the surface of the *sushimeshi* 4 (Fig. 3). Further, the frozen sushi roll had a bad appearance with a distorted center.

### [Example 2]

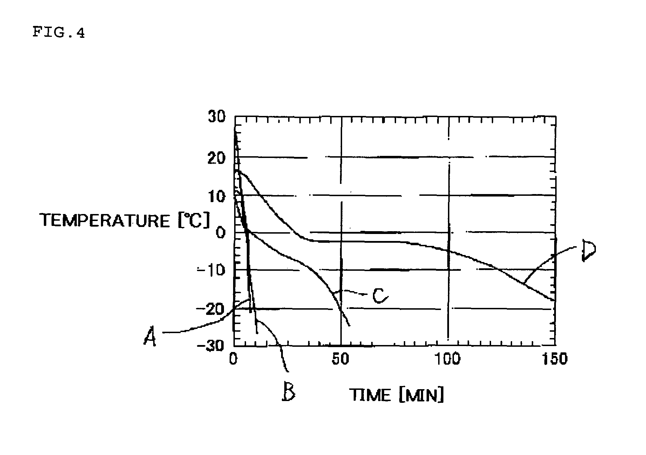

Sushi rolls were produced without freezing the core 2 in advance, and were frozen using liquid nitrogen (A), dry ice/ethanol (B), dry ice (C), and a laboratory freezer (D). A freeze curve for the central portion is represented in Fig. 4.

As can be seen in Fig. 4, freezing with liquid nitrogen (A) and dry ice/ethanol (B) quickly passed the zone of maximum ice crystal formation, whereas the passage through the zone of maximum ice crystal formation was slow with dry ice (C) and in a laboratory freezer (D). It can be seen that freezing with liquid nitrogen (A) most quickly passes the zone of maximum ice crystal formation.

### [Example 3]

The dried laver sheet 3 and *sushimeshi* 4 were wrapped around the core 2 frozen in advance, and the resulting rolls were frozen with liquid nitrogen, dry ice/ethanol, and air blast. The sushi rolls were then transferred from a freezer to a refrigerator, where the sushi was thawed and, and preserved for a predetermined time period. Each sushi roll was tested by sensory evaluation. The results are presented in Table 2.

**[Table 2]**

| Cryogen | Preservation time in refrigerator | | |
|---|---|---|---|
| | 24 hours | 35 hours | 47 hours |
| Liquid nitrogen | 5 | 4 | 3 |
| Dry ice/ethanol | 4 | 3 | 3 |
| Air blast | 3 | 2 | 2 |

| | | | |
|---|---|---|---|
| 5: Excellent, 4: Good, 3: Acceptable, 2: Poor, 1: Very poor | | | |

It can be seen from the results presented in Table 2 that the rapid freezing at ultralow temperature produces better quality for food preserved in a refrigerator after being thawed. The difference was particularly notable in the texture of the *sushimeshi,* with the faster freezing rates eliminating the feel of roughness and no-stickiness due to the degradation (retrogradation) of the *sushimeshi.* The result was most desirable when liquid nitrogen was used. Further, because the core 2 was frozen in advance, the rapid freezing of the formed sushi roll with the liquid nitrogen did not cause surface cracking, and the sushi roll had a desirable appearance.

### [Example 4]

The dried laver sheet 3 and *sushimeshi* 4 were wrapped around the core 2 frozen in advance, and the resulting rolls were frozen with liquid nitrogen, dry ice/ethanol, and air blast. The sushi rolls were then transferred from a freezer to a refrigerator. After 24 hours, the physical properties of the sushi rolls thawed in the refrigerator were measured using a texture analyzer. The results are presented in Table 3.

**[Table 3]**

| Cryogen | | Surface | | Whole | | Remarks |
|---|---|---|---|---|---|---|
| | | Hardness | Stickiness | Hardness | Stickiness | |
| | | (g) | (g) | (g) | (g) | |
| 0-Hour | refrigeration | 118.3 | 2.9 | 1619.7 | 22.8 | |
| 24-Hour refrigeration | Liquid nitrogen | 143.2 | 1.0 | 2228.6 | 14.6 | Soft |
| | Dry ice/ethanol | 210.7 | 0.9 | 2357.3 | 16.9 | ↑ |
| | Air blast | 270.5 | 1.0 | 2486.0 | 12.4 | Hard |

As can be seen from the results presented in Table 3, the sushi rolls rapidly frozen at ultralow temperature maintained softness even after thawing, and the rate of hardening due to starch degradation was slow in these sushi rolls. The texture was thus desirable.

It can be seen from these experiment results that the use of the frozen core and the rapid freezing of the formed sushi roll at ultralow temperature with liquid nitrogen or dry ice/ethanol can produce a frozen sushi roll that has a good appearance and a desirable texture for consumption, particularly when the food is rapidly frozen by being dipped in liquid nitrogen.

Note that the cryogen temperature for freezing varies depending on such factors as the diameter of the sushi roll or other rolled food, or the type of material used. For typical *hosomaki,* a temperature around -50°C is sufficient. For *futomaki,* the cryogen temperature is preferably -100°C or less.

## Claims

1. A method for producing frozen rolled food through freezing of a rolled food obtained by wrapping a food sheet around a core, **characterized by** comprising freezing the core and wrapping the food sheet around the core to form a rolled food, and freezing the rolled food with a cryogen of -50°C or less.

2. The method according to claim 1, wherein the rolled food is a sushi roll.
